# EUROPEAN PATENT APPLICATION

(11) **EP 1 215 420 A2**
(43) Date of publication of application: **19.06.2002**
(21) Application number: 01128818.0
(22) Date of filing: 04.12.2001
(51) Int. Cl.: F16J 15/06

(54) **Reinforced intumescent gasket**

(30) Priority: 12.12.2000 IT VI000272
(71) Applicant: Marvon S.r.l., 25078 Vestone (Brescia) (IT)
(72) Inventor: Monchieri, Aldo, 25078 Vestone (Brescia) (IT); Sai, Gianfranco, 25078 Vestone (Brescia) (IT)
(74) Representative: Frignoli, Luigi

(57) **Abstract**

An intumescent gasket substantially composed of a profiled body (2) for forming a seal between more than one element (5, 7), obtained by extruding a mixture comprising thermoplastic material, expanding graphite and one or more flame-retardant substances. A flexible reinforcement fabric (3) is internally coupled to the profiled body (2) of the gasket (1) during the extrusion process by means of an extrusion head so that it becomes embedded into the profiled body (2).

## Description

The present invention relates to a reinforced intumescent gasket.

The gasket concerned is intended to be peripherally mounted on fixed frames of door or window units or on the movable parts of the units, including doors, windows, French windows, skylights etc., to limit fire propagation by expanding with the heat to consequently seal the door or window.

Advantageously, the gasket of the invention can also be used between the different sectors of fixed panelling or to cover cables passing through dividing panels or walls of rooms in buildings or houses.

The most recent systems for preventing the spread of fire are known to have been conceived with the purpose of isolating in a totally airtight manner the individual constituent rooms of buildings for the double purpose of preventing the spread of fire into rooms which the fire has not yet reached, and of suffocating the fire at its origin by depriving it of the combustion air necessary for its persistence.

From this viewpoint, also aimed at satisfying specific regulations on the subject of fire prevention in force in certain countries, building construction methods involving a considerable use of intumescent gaskets have recently found increasingly widespread application. Consequently the technology involved in the production of such gaskets has likewise undergone increasing development which has resulted in the creation of high performance mixtures consisting of formulations with extremely satisfactory expansion and heat resistance characteristics.

On the other hand, intumescent gaskets must combine heat resistance with good mechanical strength to enable them not only to be easily positioned on doors and windows at normal ambient and utilization temperatures, but also to remain in position once they have expanded by the effect of heat and/or fire at high temperature.

In other words, after undergoing expansion, the gaskets must remain in position for room sealing by resisting the mechanical stresses to which they are subjected by the effect of the fire. Consequently, the gaskets may be called upon to resist pressure and/or suction forces produced by the fire which can reach a considerable value.

In the case of inadequate mechanical strength, the gaskets could enable fire and smoke to pass through the gaps and interspaces in doors and windows or through cable passageways, facilitating spread of the fire.

To overcome these mechanical strength problems substantially two different types of gasket have been developed.

A first type of gasket comprises the formation of a mixture the formulation of which enables the gasket, once expanded, to possess the necessary mechanical strength to resist the stresses produced by fire. Numerous gasket embodiments are consequently known involving the incorporation of a certain quantity of glass fibre into their interior during their production process. By mixing with the generally elastomeric gasket matrix, the fibres of suitable dimensions and thicknesses are able to confer considerable rigidity. Gaskets of this type are for example described and claimed in the patents EP 408 098 and US 5,578,671 and in international patent applications WO 94/11462 and WO 95/30724.

A second type of gasket is also known in which the intumescent mixture is fixed to a support which, depending on the specific embodiment, can be obtained either from an element in sheet form (as described in DE 4132678) or from an unwoven fabric blanket (as described in EP 508751) or from a glass fibre blanket (as described in US 4,857,364).

In certain particular embodiments, the support which gives strength and elasticity to the gasket is covered with an intumescent mixture derived from a suspension or solution in which the solvent has been evaporated in a final drying stage.

Although this latter production process enables gaskets with improved mechanical characteristics to be formed, it is very complicated and in particular does not enable gaskets of the shape required by the specific application for which the gasket is intended to be obtained.

The mechanical support for the gasket can also be obtained by an outer tubular sheath with the intumescent mixture inserted into its interior.

Gaskets of this type are for example described and claimed in EP 74575, EP 509701, GB 2 079 669, GB 2 202 484 and US 4,931,339.

The various aforestated techniques for providing the gaskets with adequate mechanical strength have knowingly been conceived and optimized on the basis of the specific intumescent mixture used.

Consequently, they may be inadequate when used in association with mixture formulations of another kind.

In this situation, the main object of the present invention is therefore to provide an intumescent gasket having adequate resistance to mechanical stresses, in particular due to fire phenomena, and produced by a method alternative to the aforestated.

Another object of the present invention is to provide a gasket with extremely satisfactory chemical and physical expansion and heat resistance characteristics.

A further object of the present invention is to provide an intumescent gasket which is constructionally simple and operationally totally reliable.

These and further objects are all attained by the intumescent gasket of the invention, comprising, for forming a seal between more than one element, a profiled body of the type obtainable by extruding a mixture comprising thermoplastic material, expanding graphite and one or more flame-retardant substances. According to the invention, the gasket is characterised by comprising a flexible reinforcement embedded in the profiled body of the gasket.

This gasket substantially reduces the risk of smoke and/or fire propagation between the various rooms of buildings in the case of fire. In this respect, its improved mechanical strength characteristics enable this gasket to remain in position to seal doors, windows or cable passageways even if considerable pressures or vacuums arise due to the fire.

Further characteristics and advantages of the invention will be more apparent from the ensuing detailed description given with the aid of the accompanying drawings, which represent one embodiment thereof by way of non limiting example, and in which:
- Figure 1: is a schematic perspective view of an embodiment of the intumescent gasket according to the invention;
- Figure 2: is a schematic perspective view of a door with the intumescent gasket of the invention disposed thereon;
- Figure 3: is a schematic perspective view of a door frame with the intumescent gasket of the invention disposed thereon.

In the accompanying drawings, the reference numeral 1 indicates overall the gasket of the present invention.

It is particularly suitable for use on door or window units of any kind, such as doors, windows, French windows, skylights, glass doors, fire-retardant ventilation shutters, or in cable, pipe, ventilation or other passageways, to seal the individual rooms of a building in case of fire.

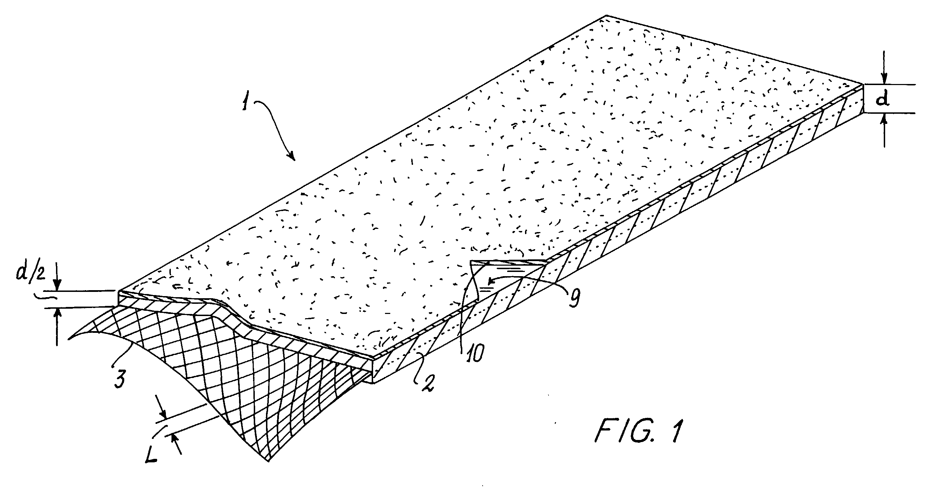

Figure 1 shows by way of example a possible strip-like embodiment of the gasket of the invention, however the same gasket 1 can be also formed in other shapes without thereby deviating from the scope of protection of the present invention.

The intumescent gasket of the invention is produced by an extrusion process using a traditional screw unit to force the raw material through an extrusion head generally heated to between 130° and 170°C. The said raw material therefore assumes by this procedure the shape of a profiled body 2 of thickness, conformation and size suitably selected for the specific use. The profiled body 2 obtained in this manner is substantially composed of a mixture comprising thermoplastic material, expanding graphite and one or more flame-retardant substances.

Numerous other components can also be added to these, such as binders, inorganic fillers etc., without for this reason deviating from the scope of protection of the present invention.

According to the invention, the gasket 1 comprises a flexible reinforcement fabric 3 embedded in the profiled body 2 of the gasket 1.

Advantageously, a die (in particular of the type known as a cross die) is suitably disposed in the final part of the extrusion head to extrude the strip-shaped gasket with the reinforcement fabric 3 internally incorporated and with a cross-section of the desired shape. In this manner, the fabric 3 is positioned within the thickness d of the profiled body 2 in a substantially central position.

According to a preferred embodiment of the present invention the fabric 3 consists of netting of composite material of high mechanical strength.

This material can consist for example of glass fibres or carbon fibres.

Otherwise, the fabric 3 can be in the form of metal netting, in particular of iron with the component mesh threads having a thickness less than one millimetre.

Advantageously, the mesh apertures can have a width L between 1 and 5 mm.

Operationally, when in the case of fire the gasket 1 expands by the effect of heat and by the presence in its interior of the expanding graphite, the fabric 3 embedded in the interior of the profiled body 2 becomes separated from the fire by an increasingly large layer (d/2) of expanded intumescent material which isolates the mesh to preserve its integrity, hence without impairing its mechanical strength characteristics.

This means that the gasket 1 does not fracture and instead remains compact in a continuous form able to seal the panels, doors or windows on which it is mounted.

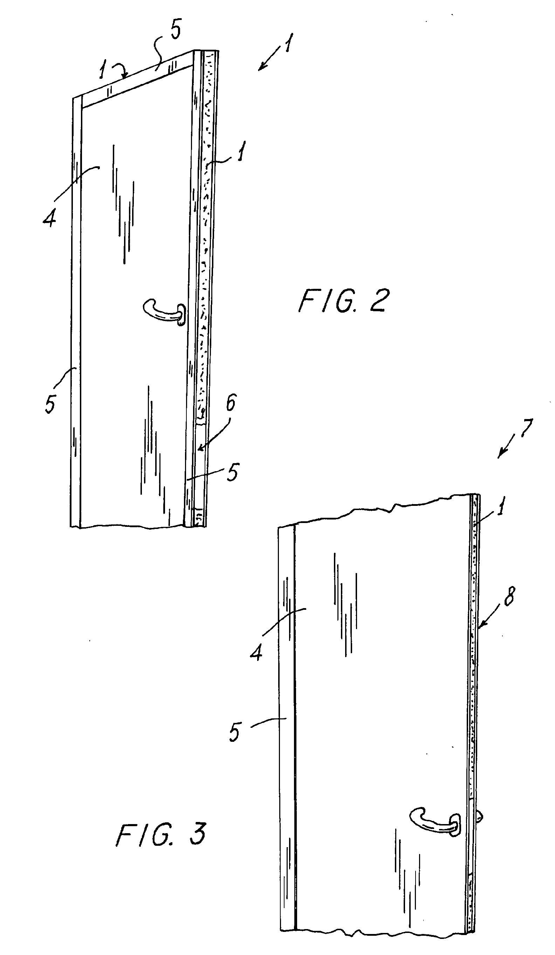

In accordance with the examples shown in Figures 2 and 3, the gasket 1 can be for example advantageously mounted between a movable door wing 4 and a fixed frame 5 of a door unit.

Specifically, in Figure 2 the gasket is positioned along the peripheral outline 6 of a fixed frame 5 for receiving the wing 4 of a door 7, whereas in Figure 3 it is positioned along the outer contour 8 of the door 7 itself.

Said gasket 1 can obviously be also used on door or window units of any other kind, and can be wrapped about cables and/or pipes in passageways provided in walls and/or panels or used between a number of fixed panels for partitioning spaces within rooms.

For this purpose, on a flat face 9 of the gasket 1 there can be provided suitable adhesion means, consisting for example of a layer 10 of adhesive material, enabling it to be easily installed.

The invention thus conceived attains all the stated objects.

In its practical embodiment it can obviously assume forms and configurations different from that illustrated, without for this reason deviating from the present scope of protection.

Moreover all details can be replaced by technically equivalent elements, and the dimensions, shapes and materials used can be chosen at will according to requirements.

## Claims

1. An intumescent gasket with a profiled body (2) for forming a seal between more than one element (5, 7), obtained by extruding a mixture comprising thermoplastic material, expanding graphite and at least one or more flame-retardant substance, **characterised by** comprising a flexible reinforcement fabric (3) embedded in said profiled body (2) of the gasket (1).

2. A gasket as claimed in claim 1, **characterised in that** said fabric (3) is inserted into the thickness (d) of said profiled body (2) in a substantially central position.

3. A gasket as claimed in claim 1, **characterised in that** said fabric (3) consists of netting of composite material of high mechanical strength.

4. A gasket as claimed in claim 3, **characterised in that** said composite material is glass fibre.

5. A gasket as claimed in claim 3, **characterised in that** said composite material is carbon fibre.

6. A gasket as claimed in claims 1 to 5, **characterised in that** said netting is composed of apertures of width between 1 and 5 mm.

7. A gasket as claimed in claims 1 to 6, **characterised by** presenting at least one connection surface (9) with adhesion means (10) applied thereon, for easy installation of the gasket (1) on a support (5, 7).

8. A gasket as claimed in claim 7, **characterised in that** said support delimits the wing (4) and the frame (5) of door or window units (7), and respectively the outer contour (8) of such door or window units (7).

9. A gasket as claimed in claims 1 to 6, **characterised by** being wrapped about cables and/or pipes in passageways provided in walls and/or panels.

10. A gasket as claimed in claims 1 to 6, **characterised by** being mounted between a number of fixed panels for partitioning spaces within rooms.
